# EUROPEAN PATENT APPLICATION

(11) **EP 4 647 980 A1**
(43) Date of publication of application: **12.11.2025**
(21) Application number: 24752679.1
(22) Date of filing: 18.01.2024
(51) Int. Cl.: G06N 20/00

(54) **FEDERATED LEARNING METHOD AND APPARATUS, RELATED DEVICE AND STORAGE MEDIUM**

(30) Priority: 10.02.2023 CN 202310118232
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Qin, Beijing 100053 (CN); LI, Weiyuan, Beijing 100053 (CN); LIAN, Yue, Beijing 100053 (CN)
(74) Representative: Murgitroyd & Company
(86) International application number: PCT/CN2024/073073
(87) International publication number: WO 2024/164822

(57) **Abstract**

A joint learning method and apparatus, a related device, and a storage medium are provided. The method includes: sending, by a first network function, a first request to a network control device corresponding to a type of joint learning nodes, where the first request is used for requesting to optimize a network connection among the joint learning nodes.

## Description

### CROSS-REFERENCE TO RELATED APPLICATION

The present application is based on and claims a priority to the Chinese patent application No. 202310118232.6 filed on February 10, 2023, a disclosure of which is incorporated herein by reference in its entirety.

### TECHNICAL FIELD

The present application relates to the field of artificial intelligence (AI) technology, in particular, to a joint learning method and apparatus, a related device, and a storage medium.

### BACKGROUND

To address the issues of data fragmentation and data silos caused by insufficient data samples in a single region and the inability to share data across different regions, the related art has proposed the concept of joint learning. As a typical representative of joint learning, federated learning enables distributed joint modeling by keeping local data on-premises without compromising data privacy, thereby enhancing machine learning (ML) modeling performance. However, existing joint learning solutions suffer from low execution efficiency.

### SUMMARY

To solve the problems in the related art, embodiments of the present application provide a joint learning method and apparatus, a related device, and a storage medium.

Technical solutions in the embodiments of the present application are implemented below.

The present application provides in some embodiments a joint learning method, applied to a first network function, the method including:
sending a first request to a network control device corresponding to a type of joint learning nodes, where the first request is used for requesting to optimize a network connection among the joint learning nodes.

In the foregoing solution, the sending the first request to the network control device corresponding to the type of the joint learning nodes includes:
sending the first request to the network control device corresponding to the type of the joint learning nodes in a case that a quality of the network connection among the joint learning nodes is less than or equal to a preset threshold.

In the foregoing solution, the first request carries related parameters used for optimizing the network connection.

In the foregoing solution, the network control device is a software defined network (SDN) controller in a case that the joint learning nodes are joint learning nodes in an operator network.

In the foregoing solution, the network control device is a docking node of an external network in a case that the joint learning nodes are nodes external to an operator network.

In the foregoing solution, the network control device is a policy control function (PCF) in a case that the joint learning nodes are user equipments (UEs).

In the foregoing solution, the first request carries at least one of the following:
Internet Protocol (IP) addresses of the joint learning nodes associated with the network connection to be optimized; or
a quality of service (QoS) requirement of the network connection among the joint learning nodes.

In the foregoing solution, the first request carries at least one of the following:
identifiers of the UEs; or
a QoS requirement of a bearer flow of the UEs.

The present application further provides in some embodiments a joint learning method, applied to a network control device, the method including:
receiving a first request sent by a first network function, where the first request is used for requesting to optimize a network connection among joint learning nodes, and a type of the joint learning nodes corresponds to the network control device; and
optimizing the network connection based on the received first request.

In the foregoing solution, the first request carries related parameters used for optimizing the network connection.

In the foregoing solution, the network control device is an SDN controller in a case that the joint learning nodes are joint learning nodes in an operator network.

In the foregoing solution, the optimizing the network connection based on the received first request includes:
calculating an optimal path based on the received first request, and sending the optimal path to a related routing device, where the optimal path is used for transmitting data among the joint learning nodes.

In the foregoing solution, the network control device is a PCF in a case that the joint learning nodes are UEs.

In the foregoing solution, the optimizing the network connection based on the received first request includes:
sending a policy control and charging (PCC) policy to a user plane function (UPF) through a session management function (SMF).

In the foregoing solution, the PCC policy includes at least one of the following:
a resource allocation priority;
a guaranteed bit rate;
a maximum bit rate; or
a maximum packet loss rate.

In the foregoing solution, the network control device is a docking node of an external network in a case that the joint learning nodes are nodes external to an operator network.

In the foregoing solution, the optimizing the network connection based on the received first request includes:
controlling a network control node corresponding to the docking node of the external network to perform related path configuration.

In the foregoing solution, the first request carries at least one of the following:
IP addresses of the joint learning nodes associated with the network connection to be optimized; or
a QoS requirement of the network connection among the joint learning nodes.

In the foregoing solution, the first request carries at least one of the following:
identifiers of the UEs; or
a QoS requirement of a bearer flow of the UEs.

In the foregoing solution, the method further includes:
deleting the received first request in a case that joint learning ends.

The present application further provides in some embodiments a joint learning apparatus, including:
a first sending unit, configured to send a first request to a network control device corresponding to a type of joint learning nodes, where the first request is used for requesting to optimize a network connection among the joint learning nodes.

The present application further provides in some embodiments a joint learning apparatus, including:
a first receiving unit, configured to receive a first request sent by a first network function, where the first request is used for requesting to optimize a network connection among joint learning nodes, and a type of the joint learning nodes corresponds to the network control device; and
a first processing unit, configured to optimize the network connection based on the received first request.

The present application further provides in some embodiments a first network function, including a first processor and a first communication interface, where
the first communication interface is configured to send a first request to a network control device corresponding to a type of joint learning nodes, where the first request is used for requesting to optimize a network connection among the joint learning nodes.

The present application further provides in some embodiments a network control device, including a second processor and a second communication interface, where
the second communication interface is configured to receive a first request sent by a first network function, where the first request is used for requesting to optimize a network connection among joint learning nodes, and a type of the joint learning nodes corresponds to the network control device; and
the second processor is configured to optimize the network connection based on the received first request.

The present application further provides in some embodiments a first network function, including a first processor and a first memory configured to store a computer program executable on the first processor,
where the first processor is configured to, when executing the computer program, perform the steps of any method on the side of the first network function.

The present application further provides in some embodiments a network control device, including a second processor and a second memory configured to store a computer program executable on the second processor,
where the second processor is configured to, when executing the computer program, perform the steps of any method on the side of the network control device.

The present application further provides in some embodiments a storage medium, having a computer program stored therein, where the computer program, when executed by a processor, implements the steps of any method on the side of a first network function, or the steps of any method on the side of a network control device.

For the joint learning method and apparatus, the related device, and the storage medium provided in the embodiments of the present application, a first network function sends a first request to a network control device corresponding to a type of joint learning nodes, where the first request is used for requesting to optimize a network connection among the joint learning nodes; and the network control device receives the first request sent by the first network function, and optimizes the network connection based on the received first request. In the foregoing solution, the type of the joint learning nodes corresponds to the network control device. In a process of joint learning, the network control device may dynamically optimize the network connection among the joint learning nodes, to enhance the quality of the network connection among the joint learning nodes, thereby enhancing data transmission efficiency among the joint learning nodes, and enhancing the execution efficiency of joint learning.

### BRIEF DESCRIPTION OF THE DRAWINGS

Fig. 1 is a diagram of an example of a system architecture of joint learning to which embodiments of the present application are applicable;
Fig. 2 is a schematic flowchart of an implementation of a joint learning method according to an embodiment of the present application;
Fig. 3 is a schematic flowchart of an implementation of a joint learning method according to an embodiment of the present application;
Fig. 4 is a schematic flowchart of an interaction of a joint learning method according to an embodiment of the present application;
Fig. 5 is a schematic flowchart of an interaction of a joint learning method according to an embodiment of the present application;
Fig. 6 is a schematic flowchart of an interaction of a joint learning method according to an embodiment of the present application;
Fig. 7 is a schematic structural diagram of a joint learning apparatus according to an embodiment of the present application;
Fig. 8 is a schematic structural diagram of a joint learning apparatus according to an embodiment of the present application;
Fig. 9 is a schematic structural diagram of a first network function according to an embodiment of the present application;
Fig. 10 is a schematic structural diagram of a network control device according to an embodiment of the present application.

### DETAILED DESCRIPTION

Joint learning is a subset or paradigm of distributed ML. The joint learning may also be referred to as distributed joint learning. In current network intelligence application scenarios, support for joint learning has been introduced. Specifically, intelligent computing nodes in a network are deployed in a distributed manner, and joint learning among these intelligent computing nodes is supported. The intelligent computing nodes may be understood as nodes with computing capabilities or data processing capabilities.

Existing technical solutions for joint learning implementation mechanisms primarily focus on optimizing joint learning algorithms such as node selection, parameter aggregation, parameter compression, and the like. However, in network-supported joint learning solutions, no solution leverages network advantages to optimize data transmission efficiency among joint learning nodes. Since transmission efficiency is a critical factor affecting the execution efficiency of joint learning, existing joint learning solutions have suboptimal execution efficiency.

Based on this, in various embodiments of the present application, a first network function sends a first request to a network control device corresponding to a type of joint learning nodes, where the first request is used for requesting to optimize a network connection among the joint learning nodes; and the network control device receives the first request sent by the first network function, and optimizes the network connection based on the received first request. In the foregoing solution, the type of the joint learning nodes corresponds to the network control device. In a process of joint learning, the network control device may dynamically optimize the network connection among the joint learning nodes, to enhance the quality of the network connection among the joint learning nodes, thereby enhancing data transmission efficiency among the joint learning nodes, and enhancing the execution efficiency of joint learning.

The present application is further described below in detail with reference to the accompanying drawings and the embodiments.

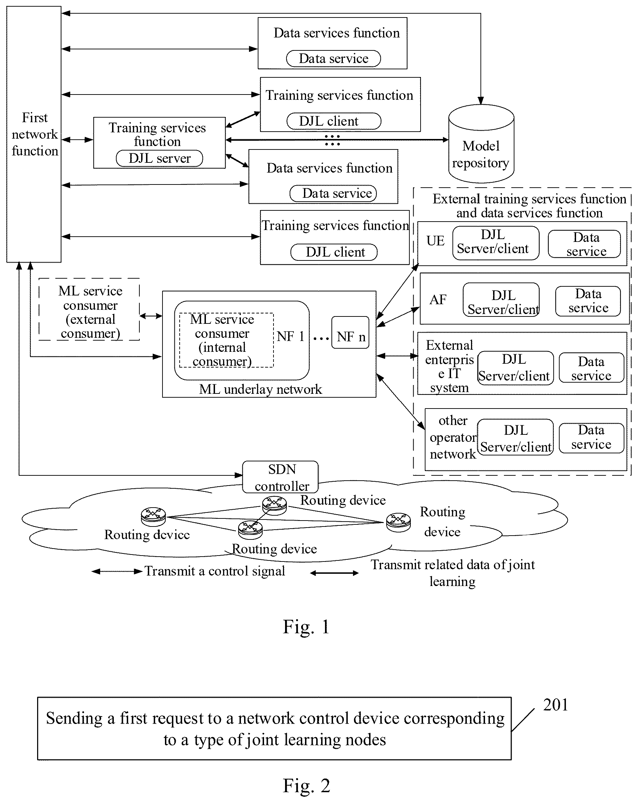

First, to better describe the joint learning method according to the embodiments of the present application, Fig. 1 shows an example of a system architecture of joint learning to which embodiments of the present application are applicable. In the system architecture in Fig. 1, an ML service consumer may request an ML service from a first network function through a network function (NF) of an ML underlay network. The NF of the ML underlay network may be understood as a basic network function of an operator. The first network function mainly provides related services for joint learning. The provided services include: receiving a joint learning task sent by the ML service consumer, analyzing the joint learning task to determine joint learning nodes, distributing the joint learning task to the joint learning nodes, monitoring the status of network connection among the joint learning nodes, and sending a first request to a network control device, where the first request is used for requesting to optimize the network connection among the joint learning nodes. The joint learning nodes may be understood as network nodes or intelligent computing nodes that perform the joint learning task or participate in joint learning. The network nodes or the intelligent computing nodes may be a training servers function or a data servers function. The joint learning task may be understood as a distributed joint learning task or a joint learning request.

The first network function may be an artificial intelligence (AI) service orchestration function in an operator network, or may be an ML service orchestration function in an operator network, for example, an ML function orchestration (MLFO) services function in an operator network. The ML service consumer includes an internal consumer and an external consumer. The external consumer interacts with the NF of the ML underlay network through an open exposure interface of the ML underlay network. The internal consumer includes the NF of the ML underlay network. The external consumer includes a consumer of an ML service from an external system or an external operator network.

The joint learning nodes include a parameter aggregation node (which may be denoted as a DJL server), a distributed execution node (which may be denoted as a DJL client), and a distributed data processing node (which may be denoted as a data service). DJL is short for distributed joint learning. The parameter aggregation node and the distributed execution node are both orchestrated by the first network function and need to be registered with the first network function in advance. The parameter aggregation node may be understood as a joint learning server node. The distributed execution node may be understood as a client node (training client) or a client execution node. The distributed data processing node is related to the client node. The distributed data processing node may be referred to as a data processing node or a data server node. The training servers function inside the operator network may be used as the parameter aggregation node and/or the distributed execution node.

The parameter aggregation node and the distributed execution node may be deployed inside the operator network, or may be at least one of the following: UE, an application function (AF), an external enterprise IT system, or may alternatively be deployed in an operator external network, for example, another operator network. The another operator network includes an International Mobile Telecommunications (IMT) network, for example, an IMT-2020 network. In other words, the parameter aggregation node and the distributed execution node may be internal nodes of the operator network, or may be nodes external to the operator network (nodes of an external operator network). The parameter aggregation node and the distributed execution node deployed in the external operator network access the ML underlay network through the open exposure interface of the ML underlay network and may perform signaling interaction with the first network function.

The network control device includes at least one of a controller responsible for underlying routing devices (routers), a PCF, and a docking node of an external network. The external network may be understood as an external operator network. The controller responsible for underlying routing devices includes an SDN controller. The SDN controller and the routers together constitute an underlying transmission network of the operator network, and provides network connection for network nodes in the operator network. The network nodes include joint learning nodes.

The present application provides in some embodiments a joint learning method, applied to the first network function in the system architecture in Fig. 1. As shown in Fig. 2, the method includes the following steps.

A step 101 includes: sending a first request to a network control device corresponding to a type of joint learning nodes, where the first request is used for requesting to optimize a network connection among the joint learning nodes.

The first network function receives a joint learning task sent by an ML service consumer, determines joint learning nodes based on the received joint learning task, and determines a type of the joint learning nodes; and determines a network control device corresponding to the type of the joint learning nodes, and sends a first request to the determined network control device, where the first request may be understood as a network connection optimization request. The first network function may send the first request to a network controller corresponding to a type of some or all of the joint learning nodes, where the network controller corresponding to the type of some or all of the joint learning nodes may be a network controller corresponding to a type of joint learning nodes associated with network connection to be optimized.

An implementation process of determining the joint learning nodes based on the received joint learning task may be: analyzing the received joint learning task to obtain an analysis result; and selecting the joint learning nodes from intelligent computing nodes based on the analysis result. During the analysis of the received joint learning task, requirements of the joint learning task and characteristics of data to which the joint learning task may be analyzed, and characteristics of data of the intelligent computing nodes and distances between the positions of the intelligent computing nodes and the ML service consumer may be further analyzed.

The type of the joint learning nodes may be set according to an actual case. A correspondence relationship or an association relationship exists between the type of the joint learning nodes and the network control device. The network control device corresponding to the type of the joint learning nodes may be understood as a network control device responsible for control network connection among the joint learning nodes of the type.

It should be noted that different types of network control devices are responsible for controlling network connection among different types of joint learning nodes. Instead of sending the first request to all network control devices in a network, the first request is sent to the network control device corresponding to the type of the joint learning nodes, so that signaling overhead of the first network function can be reduced, resources of network controllers unrelated to the network connection that needs to be optimized can be further saved, and the success rate of optimizing network connection can be further improved.

In an embodiment, the type of the joint learning nodes includes at least one of a first type, a second type, or a third type. The first type indicates that the joint learning nodes are joint learning nodes in an operator network, including at least one of a parameter aggregation node, a distributed execution node, and a distributed data processing node. The joint learning nodes in the operator network may be understood as training servers functions and/or data servers functions in the operator network in Fig. 1. The second type indicates that the joint learning nodes are UEs. The third type indicates that the joint learning nodes are nodes external to an operator network, and the nodes external to the operator network include a parameter aggregation node and/or a distributed execution node.

In a process of joint learning, nodes that participate in joint learning may change due to reasons such as the status of joint learning nodes, the network status, user requirements, and the like. The first network function needs to reselect or adjust nodes that perform the joint learning task. In a case that the joint learning nodes change, the network connection among the joint learning nodes may also change. Therefore, the first network function needs to redetermine the first request. Based on this, in an embodiment, the method further includes:
redetermining the first request in a case that the joint learning nodes change.

The first network function may determine, based on at least one of the following, whether to change or adjust the joint learning nodes:
status information of the joint learning nodes;
network status;
position information of the joint learning nodes;
characteristics of data of the joint learning nodes; or
requirement information of the joint learning task.

In a case that the joint learning nodes are changed or adjusted, based on the changed or adjusted joint learning nodes, the network connection among the joint learning nodes is redetermined, and the first request is redetermined based on the redetermined network connection among the joint learning nodes.

The status information of the joint learning nodes may indicate whether the joint learning nodes are in an available state or indicates whether a fault occurs. The network status may be understood as network connection status, and may indicate whether a network is stable or whether a network is abnormal. The characteristics of the data of the joint learning nodes may be understood as a data type, a data processing manner, and the like supported by the joint learning nodes. The requirement information of the joint learning task may include a capability requirement, a data processing requirement, and/or the like for the intelligent computing nodes.

To reduce the signaling overhead of the first network function and save data processing resources of the network control device, the first network function may request the network control device to optimize the network connection among the joint learning nodes in a case that the quality of the network connection among the joint learning nodes is poor. Based on this, in an embodiment, the sending the first request to the network control device corresponding to the type of the joint learning nodes includes:
sending the first request to the network control device corresponding to the type of the joint learning nodes in a case that a quality of the network connection among the joint learning nodes is less than or equal to a preset threshold.

The first network function detects the quality of the network connection among the joint learning nodes that perform the distributed joint learning task. In a case that the quality of the network connection among the joint learning nodes is less than or equal to the preset threshold, the network connection among the joint learning nodes needs to be optimized, and the first network function sends the first request to the network control device corresponding to the type of the joint learning nodes. The quality of the network connection may be measured or evaluated through indicators such as a packet loss rate, latency, and/or the like.

It should be noted that the first request may not be sent to the network control device corresponding to the type of the joint learning nodes in a case that the quality of the network connection among the joint learning nodes is greater than a preset threshold.

To improve the efficiency and the success rate of optimizing network connection by a network controller, in an embodiment, the first request carries related parameters used for optimizing the network connection.

Because different types of network control devices are responsible for controlling network connection among different types of joint learning nodes, to accurately optimize the network connection that needs to be optimized, in an embodiment, in a case that the joint learning nodes are joint learning nodes in an operator network, the network control device is an SDN controller.

To accurately optimize the network connection that needs to be optimized, in an embodiment, the network control device is a PCF in a case that the joint learning nodes are UEs.

To accurately optimize the network connection that needs to be optimized, in an embodiment, the network control device is a docking node of an external network in a case that the joint learning nodes are nodes external to an operator network.

The external network may be understood as an external operator network. The docking node of the external network includes at least one of the following: an AF, an external enterprise IT system, or an MLFO (an MLFO in an external network) servers function in another operator network.

In a case that the joint learning nodes are joint learning nodes in an operator network or nodes external to the operator network, the first request carries at least one of the following:
IP addresses of the joint learning nodes associated with the network connection to be optimized; or
a QoS requirement of the network connection among the joint learning nodes.

When the network connection to be optimized involves the joint learning nodes in the operator network, because the SDN controller is responsible for controlling network connection among the joint learning nodes in the operator network, the first network function sends the first request to the SDN controller.

When the network connection to be optimized involves the nodes external to the operator network (the joint learning nodes in the external operator network), because the docking node of the external network is responsible for controlling network connection among the nodes external to the operator network, a peering network control device of the first network function is a docking node of an external network, and the first network function sends the first request to the docking node of the external network through a predetermined interface. It should be noted that whether the network connection in the external operator network can be optimized depends on the function of the external operator network.

The first request carries the IP addresses of the joint learning nodes associated with the network connection to be optimized; and/or a QoS requirement of the network connection among the joint learning nodes. The IP addresses of the joint learning nodes are used for the network control device to determine the network connection to be optimized. The joint learning nodes associated with the network connection to be optimized include at least one of a parameter aggregation node, a distributed execution node, and a distributed data processing node. The QoS requirement of the network connection includes at least one of maximum latency, minimum bandwidth, a maximum packet loss rate, or maximum jitter.

In a case that the joint learning nodes are UEs, in an embodiment, the first request carries at least one of the following:
identifiers of the UEs; or
a QoS requirement of a bearer flow of the UEs.

When the network connection to be optimized involves the UEs, the first network function sends the first request to the PCF responsible for controlling a UE user plane. In this case, the first request may also be understood as a user plane optimization request. The first request carries the identifiers of the UEs and the QoS requirement of the bearer flow of the UEs. The identifiers of the UEs include a Subscription Permanent Identifier (SUPI) and/or an International Mobile Subscriber Identity (IMSI). The QoS requirement of the bearer flow of the UEs includes at least one of maximum latency, a maximum packet loss rate, or maximum jitter. The bearer flow of the UEs may be understood as a protocol data unit (PDU) session channel of the UEs.

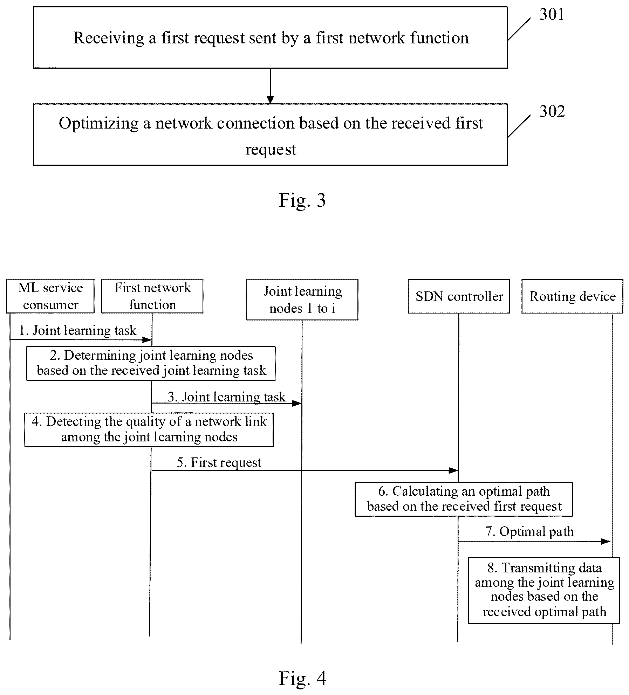

Correspondingly, the present application further provides in some embodiments a joint learning method, applied to a network control device. As shown in Fig. 3, the method includes:
A step 301 includes: receiving a first request sent by a first network function, where the first request is used for requesting to optimize a network connection among joint learning nodes, and a type of the joint learning nodes corresponds to the network control device.
A step 302 includes: optimizing the network connection based on the received first request.

The network control device determines the network connection to be optimized based on the received first request, and optimizes the network connection to be optimized.

To improve the efficiency of optimizing network connection, in an embodiment, the first request carries related parameters used for optimizing the network connection.

In an embodiment, the network control device is an SDN controller in a case that the joint learning nodes are joint learning nodes in an operator network.

In an embodiment, the network control device is a docking node of an external network in a case that the joint learning nodes are nodes external to an operator network.

In an embodiment, the network control device is a PCF in a case that the joint learning nodes are UEs.

In a case that the network control device is an SDN controller or a docking node of an external network, in an embodiment, the first request carries at least one of the following:
IP addresses of the joint learning nodes associated with the network connection to be optimized; or
a QoS requirement of the network connection among the joint learning nodes.

The network control device may determine the joint learning nodes based on the IP addresses of the joint learning nodes associated with the network connection to be optimized, and determine network connection related to the joint learning nodes to obtain the network connection to be optimized.

In a case that the network control device is a PCF, in an embodiment, the first request carries at least one of the following:
identifiers of the UEs; or
a QoS requirement of a bearer flow of the UEs.

In a case that the joint learning nodes associated with the network connection to be optimized are joint learning nodes in an operator network, the network control device is an SDN controller. The first network function sends the first request to the SDN controller. Based on this, to optimize the network connection among the joint learning nodes in the operator network, in an embodiment, the optimizing the network connection based on the received first request includes:
calculating an optimal path based on the received first request, and sending the optimal path to a related routing device, where the optimal path is used for transmitting data among the joint learning nodes.

In a case that the SDN controller receives the first request, an optimal path among the joint learning nodes is calculated based on information carried in the received first request, and the optimal path is sent to routing devices related to the optimal path, to enable the related routing devices to transmit related data of the joint learning nodes based on the received optimal path, thereby improving data transmission efficiency.

For example, the SDN controller determines the network connection to be optimized based on the IP addresses of the joint learning nodes associated with the network connection to be optimized; and calculates the optimal path among the joint learning nodes related to the network connection to be optimized based on the network topology of the operator network, the IP addresses of the joint learning nodes, and/or the QoS requirement of the network connection among the joint learning nodes.

In a case that the joint learning nodes associated with the network connection to be optimized are UEs, the network control device is a PCF. The first network function sends the first request to the PCF. Based on this, to optimize the network connection related to the UEs, in an embodiment, the optimizing the network connection based on the received first request includes:
sending a PCC policy to a UPF through an SMF.

The PCF may determine the PCC policy based on the information carried in the first request, and sends the PCC policy to the SMF to enable the SMF to forward the received PCC policy to the UPF, so that the UPF can optimize a transmission policy of related data of the UEs based on the received PCC policy, thereby enhancing the transmission efficiency of the related data of the UEs. The PCC policy may be preconfigured, or may be determined by the PCF based on the QoS requirement of the bearer flow of the UEs carried in the first request.

In an embodiment, the PCC policy includes at least one of the following:
a resource allocation priority;
a guaranteed bit rate;
a maximum bit rate; or
a maximum packet loss rate.

In a case that the joint learning nodes associated with the network connection to be optimized are nodes external to an operator network, the network control device is a docking node of an external network. The first network function sends the first request to the docking node of the external network. Based on this, to optimize the network connection among the nodes external to the operator network, in an embodiment, the optimizing the network connection based on the received first request includes:
controlling a network control node corresponding to the docking node of the external network to perform related path configuration.

In a case that the docking node of the external network receives the first request sent by the first network function, the first request may be forwarded to the network control node corresponding to the docking node of the external network, to control the network control node to configure a data transmission path among the related joint learning nodes based on the information carried in the first request, thereby enhancing data transmission efficiency among the nodes external to the operator network.

After joint learning ends, to save storage resources of the network control device, in an embodiment, the method further includes:
deleting the received first request in a case that joint learning ends.

In a case that the joint learning ends, the network controller no longer needs to monitor the network connection among the joint learning nodes, and deletes the received first request.

The present application is further described below in detail with reference to application examples and schematic flowcharts of interactions.

### Application Example 1

The joint learning nodes associated with the network connection to be optimized are joint learning nodes in an operator network, and the network control device is an SDN controller. As shown in Fig. 4, the joint learning method includes:
A step 1 includes: receiving, by a first network function, a joint learning task sent by an ML service consumer.

The joint learning task may also be understood as a joint learning request. The first network function may be MLFO of the operator network.

A step 2 includes: determining, by the first network function, joint learning nodes based on the received joint learning task.

The first network function analyzes the received joint learning task to obtain an analysis result; and selects joint learning nodes from intelligent computing nodes based on the analysis result, for example, selects a parameter aggregation node, a distributed execution node, and a distributed data processing node to participate in joint learning.

During the analysis of the received joint learning task, requirements of the joint learning task and characteristics of data to which the joint learning task may be analyzed, and characteristics of data of the intelligent computing nodes and distances between the positions of the intelligent computing nodes and the ML service consumer may be further analyzed.

The first network function may further redetermine or adjust the joint learning nodes based on at least one of the following:
status information of the joint learning nodes;
network status;
position information of the joint learning nodes;
characteristics of data of the joint learning nodes; or
requirement information of the joint learning task.

A step 3 includes: sending, by the first network function, the joint learning task to the determined joint learning nodes.

The joint learning nodes perform joint learning based on the received joint learning task.

A step 4 includes: detecting, by the first network function, the quality of network connection among the joint learning nodes.

A step 5 includes: sending, by the first network function, a first request to the SDN controller when the joint learning nodes associated with the network connection to be optimized are the joint learning nodes in the operator network in a case that a quality of the network connection among the joint learning nodes is less than or equal to a preset threshold.

The first network function may not send the first request in a case that the quality of the network connection among the joint learning nodes is greater than the preset threshold. The first request carries at least one of the following:
IP addresses of the joint learning nodes associated with the network connection to be optimized; or
a QoS requirement of the network connection among the joint learning nodes, where the QoS requirement includes at least one of maximum latency, minimum bandwidth, a maximum packet loss rate, or maximum jitter.

The first network function may further redetermine the first request in a case that the joint learning nodes change.

A step 6 includes: receiving, by the SDN controller, the first request, and calculating an optimal path based on the received first request.

In an embodiment, in a case that joint learning ends, the SDN controller may further delete the received first request.

A step 7 includes: sending, by the SDN controller, the optimal path to related routing devices.

A step 8 includes: transmitting, by the routing device, data among the joint learning nodes based on the received optimal path.

### Application Example 2

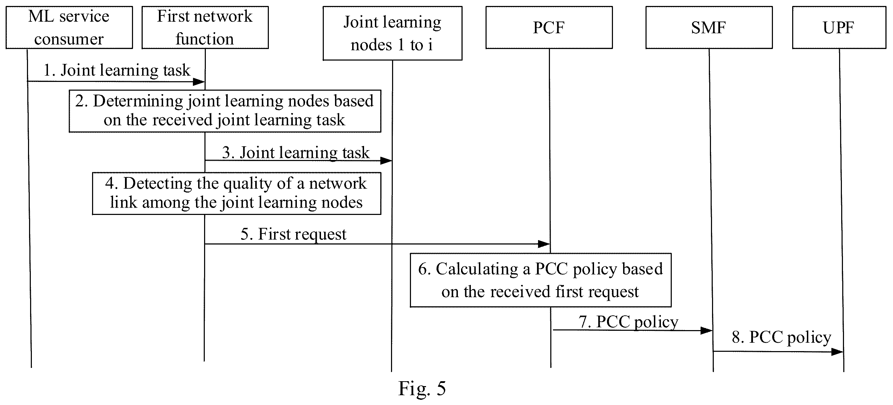

The joint learning nodes associated with the network connection to be optimized are UEs, and the network control device is a PCF. As shown in Fig. 5, the joint learning method includes:
A step 1 includes: receiving, by a first network function, a joint learning task sent by an ML service consumer.

It should be noted that for an implementation process of the step 1 to the step 4 in Fig. 5, refer to the related description in Application Example 1. Details are not described herein.

A step 2 includes: determining, by the first network function, joint learning nodes based on the received joint learning task.

A step 3 includes: sending, by the first network function, the joint learning task to the determined joint learning nodes.

A step 4 includes: detecting, by the first network function, the quality of network connection among the joint learning nodes.

A step 5 includes: sending, by the first network function, a first request to the PCF when the joint learning nodes associated with the network connection to be optimized are the UEs in a case that a quality of the network connection among the joint learning nodes is less than or equal to a preset threshold.

The first request carries at least one of the following:
identifiers of the UEs; or
a QoS requirement of a bearer flow of the UEs.

The identifier of the UEs include a SUPI and/or an IMSI. The QoS requirement of the bearer flow of the UEs includes at least one of maximum latency, a maximum packet loss rate, or maximum jitter.

A step 6 includes: receiving, by the PCF, the first request sent by the first network function, and determining a PCC policy based on the received first request.

The PCC policy includes at least one of the following:
a resource allocation priority;
a guaranteed bit rate;
a maximum bit rate; or
a maximum packet loss rate.

In an embodiment, in a case that joint learning ends, the PCF may further delete the received first request.

A step 7 includes: sending, by the PCF, the determined PCC policy to the SMF.

A step 8 includes: forwarding, by the SMF, the received PCC policy to the UPF to enable the UPF to optimize a transmission policy of related data of the UEs based on the received PCC policy.

### Application Example 3

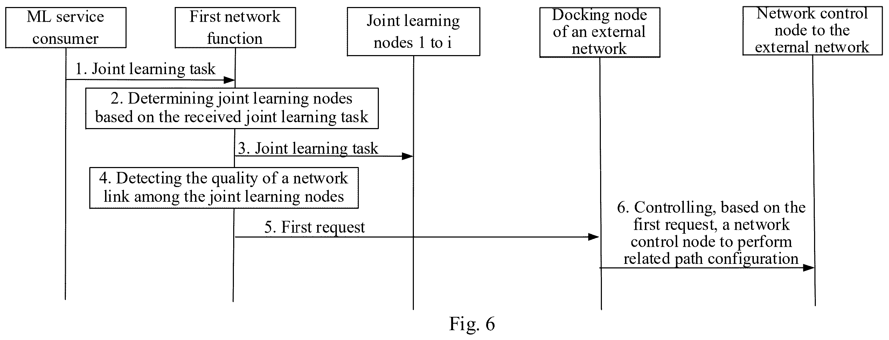

The joint learning nodes associated with the network connection to be optimized are nodes external to an operator network, and the network control device is a docking node of the external network. As shown in Fig. 6, the joint learning method includes:
A step 1 includes: receiving, by a first network function, a joint learning task sent by an ML service consumer.

It should be noted that for an implementation process of the step 1 to the step 4 in Fig. 6, refer to the related description in Application Example 1. Details are not described herein.

A step 2 includes: determining, by the first network function, joint learning nodes based on the received joint learning task.

A step 3 includes: sending, by the first network function, the joint learning task to the determined joint learning nodes.

A step 4 includes: detecting, by the first network function, the quality of network connection among the joint learning nodes.

A step 5 includes: sending, by the first network function, a first request to the docking node of the external network when the joint learning nodes associated with the network connection to be optimized are the nodes external to the operator network in a case that a quality of the network connection among the joint learning nodes is less than or equal to a preset threshold.

The docking node of the external network may be MLFO of the external network.

The first request carries at least one of the following:
IP addresses of the joint learning nodes associated with the network connection to be optimized; or
a QoS requirement of the network connection among the joint learning nodes, where the QoS requirement includes at least one of maximum latency, minimum bandwidth, a maximum packet loss rate, or maximum jitter.

A step 6 includes: controlling, by the docking node of the external network based on the received first request, a network control node corresponding to the docking node of the external network to perform related path configuration.

The docking node of the external network may forward the received first request to the corresponding network control node, and instruct the network control node to configure a data transmission path among the related joint learning nodes based on the information carried in the first request, thereby enhancing data transmission efficiency among the nodes external to the operator network.

For the joint learning method and apparatus, the related device, and the storage medium provided in the embodiments of the present application, a first network function sends a first request to a network control device corresponding to a type of joint learning nodes, where the first request is used for requesting to optimize a network connection among the joint learning nodes; and the network control device receives the first request sent by the first network function, and optimizes the network connection based on the received first request. In the foregoing solution, the type of the joint learning nodes corresponds to the network control device. In a process of joint learning, the network control device may dynamically optimize the network connection among the joint learning nodes, to enhance the quality of the network connection among the joint learning nodes, thereby enhancing data transmission efficiency among the joint learning nodes, and enhancing the execution efficiency of joint learning.

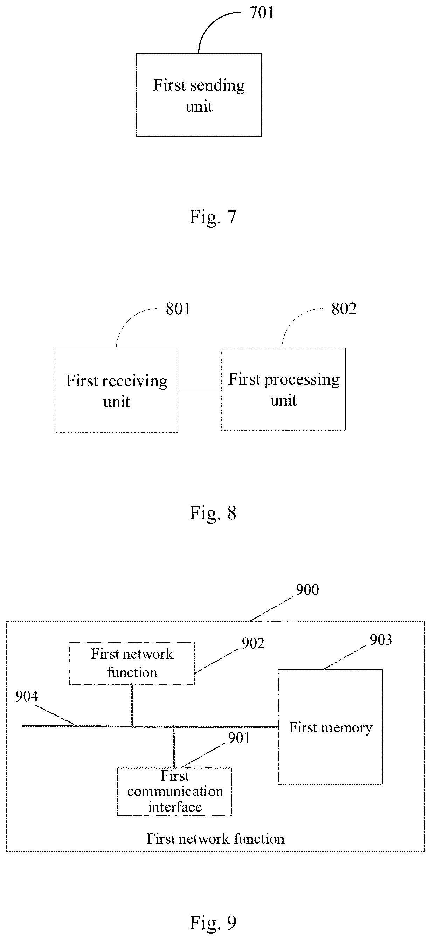

To implement the joint learning method in the embodiments of the present application, embodiments of the present application further provide a joint learning apparatus, disposed on a first network function. As shown in Fig. 7, the apparatus includes:
a first sending unit 701, configured to send a first request to a network control device corresponding to a type of joint learning nodes, where the first request is used for requesting to optimize a network connection among the joint learning nodes.

In an embodiment, the first sending unit 701 is further configured to send the first request to the network control device corresponding to the type of the joint learning nodes in a case that a quality of the network connection among the joint learning nodes is less than or equal to a preset threshold.

In an embodiment, the first request carries related parameters used for optimizing the network connection.

In an embodiment, the network control device is an SDN controller in a case that the joint learning nodes are joint learning nodes in an operator network.

In an embodiment, the network control device is a docking node of an external network in a case that the joint learning nodes are nodes external to an operator network.

In an embodiment, the network control device is a PCF in a case that the joint learning nodes are UEs.

In an embodiment, the first request carries at least one of the following:
IP addresses of the joint learning nodes associated with the network connection to be optimized; or
a QoS requirement of the network connection among the joint learning nodes.

In an embodiment, the first request carries at least one of the following:
identifiers of the UEs; or
a QoS requirement of a bearer flow of the UEs.

During actual application, the first sending unit 701 may be implemented by a processor in the joint learning apparatus in combination with a communication interface.

It should be noted that, when the joint learning apparatus provided in the foregoing embodiments performs joint learning, division of the foregoing program modules is only used as an example for description. During actual application, the foregoing processing may be allocated to different program modules for implementation as required, to be specific, an inner structure of an apparatus is divided into different program modules, to implement all or some of the processing described above. In addition, the joint learning apparatus provided in the foregoing embodiments and the embodiments of the joint learning method belong to a same concept. For specific implementation processes thereof, refer to the method embodiments. Details are not described herein again.

To implement the joint learning method in the embodiments of the present application, embodiments of the present application further provide a joint learning apparatus, disposed on a network control device. As shown in Fig. 8, the apparatus includes:
a first receiving unit 801, configured to receive a first request sent by a first network function, where the first request is used for requesting to optimize a network connection among joint learning nodes, and a type of the joint learning nodes corresponds to the network control device; and
a first processing unit 802, configured to optimize the network connection based on the received first request.

In an embodiment, the first request carries related parameters used for optimizing the network connection.

In an embodiment, the network control device is an SDN controller in a case that the joint learning nodes are joint learning nodes in an operator network.

In an embodiment, the first processing unit 802 is further configured to calculate an optimal path based on the received first request, and send the optimal path to a related routing device, where the optimal path is used for transmitting data among the joint learning nodes.

In an embodiment, the network control device is a PCF in a case that the joint learning nodes are UEs.

In an embodiment, the first processing unit 802 is further configured to send a PCC policy to a UPF through an SMF.

In an embodiment, the PCC policy includes at least one of the following:
a resource allocation priority;
a guaranteed bit rate;
a maximum bit rate; or
a maximum packet loss rate.

In an embodiment, the network control device is a docking node of an external network in a case that the joint learning nodes are nodes external to an operator network.

In an embodiment, the first processing unit 802 is further configured to control a network control node corresponding to the docking node of the external network to perform related path configuration.

In an embodiment, the first request carries at least one of the following:
IP addresses of the joint learning nodes associated with the network connection to be optimized; or
a QoS requirement of the network connection among the joint learning nodes.

In an embodiment, the first request carries at least one of the following:
identifiers of the UEs; or
a QoS requirement of a bearer flow of the UEs.

In an embodiment, the first processing unit 802 is further configured to delete the received first request in a case that joint learning ends.

During actual application, the first receiving unit 801 and the first processing unit 802 may be implemented by a processor in the joint learning apparatus in combination with a communication interface; or may be implemented by a processor in the joint learning apparatus.

It should be noted that, when the joint learning apparatus provided in the foregoing embodiments performs joint learning, division of the foregoing program modules is only used as an example for description. During actual application, the foregoing processing may be allocated to different program modules for implementation as required, to be specific, an inner structure of an apparatus is divided into different program modules, to implement all or some of the processing described above. In addition, the joint learning apparatus provided in the foregoing embodiments and the embodiments of the joint learning method belong to a same concept. For specific implementation processes thereof, refer to the method embodiments. Details are not described herein again.

Based on the hardware implementation of the foregoing program module, to implement the method on the side of a first network function in the embodiments of the present application, embodiments of the present application further provide a first network function. As shown in Fig. 9, the first network function 900 includes:
a first communication interface 901, configured to exchange information with other network nodes; and
a first processor 902, connected to the first communication interface 901 to exchange information with other network nodes, and configured to, when executing computer program, perform the foregoing method provided in one or more technical solutions on the side of the first network function. The computer program is stored in a first memory 903.

Specifically, the first communication interface 901 is configured to send a first request to a network control device corresponding to a type of joint learning nodes, where the first request is used for requesting to optimize a network connection among the joint learning nodes.

In an embodiment, the first communication interface 901 is further configured to send the first request to the network control device corresponding to the type of the joint learning nodes in a case that a quality of the network connection among the joint learning nodes is less than or equal to a preset threshold.

In an embodiment, the first request carries related parameters used for optimizing the network connection.

In an embodiment, the network control device is an SDN controller in a case that the joint learning nodes are joint learning nodes in an operator network.

In an embodiment, the network control device is a docking node of an external network in a case that the joint learning nodes are nodes external to an operator network.

In an embodiment, the network control device is a PCF in a case that the joint learning nodes are UEs.

In an embodiment, the first request carries at least one of the following:
IP addresses of the joint learning nodes associated with the network connection to be optimized; or
a QoS requirement of the network connection among the joint learning nodes.

In an embodiment, the first request carries at least one of the following:
identifiers of the UEs; or
a QoS requirement of a bearer flow of the UEs.

It should be noted that a specific processing process of the first processor 902 and the first communication interface 901 may be understood with reference to the foregoing method.

Certainly, during actual application, the various components in the first network function 900 are coupled together by a bus system 904. It may be understood that the bus system 904 is configured to implement connection and communication among these components. In addition to a data bus, the bus system 904 further includes a power bus, a control bus, and a status signal bus. However, for clear description, various buses in Fig. 9 are shown as the bus system 904.

The first memory 903 in the embodiments of the present application is configured to store various types of data to support the operation of the first network function 900. Examples of such data include any computer program operated on the first network function 900.

The foregoing method disclosed in the embodiments of the present application may be applied to the first processor 902 or implemented by using the first processor 902. The first processor 902 may be disposed as an integrated circuit chip having a signal processing capability. During implementation, the steps in the foregoing method may be accomplished by hardware integrated logic circuits or instructions in a software form in the first processor 902. The first processor 902 may be a general-purpose processor, a Digital Signal Processor (DSP), or another programmable logic device (PLD), a discrete gate or transistor logic device, a discrete hardware component, or the like. The first processor 902 may implement or execute the methods, steps, and logic block diagrams disclosed in the embodiments of the present application. The general-purpose processor may be a microprocessor, any conventional processor, or the like. The steps in the method disclosed with reference to the embodiments of the present application may be directly performed and accomplished by a hardware decoding processor or performed and accomplished by a combination of hardware and software modules in a decoding processor. The software module may be located in the storage medium. The storage medium is located in the first memory 903. The first processor 902 reads information in the first memory 903 and accomplishes the steps in the foregoing methods in combination with hardware of the processor.

In exemplary embodiments, the first network function 900 may be implemented by one or more Application-Specific Integrated Circuits (ASICs), DSPs, PLDs, Complex Programmable Logic Devices (CPLDs), Field-Programmable Gate Arrays (FPGAs), general-purpose processors, controllers, Microcontroller Units (MCUs), Microprocessors, or other electronic components for performing the foregoing methods.

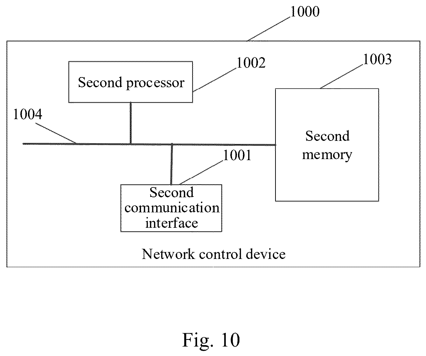

Based on the hardware implementation of the foregoing program module, to implement the method on the side of a network control device in the embodiments of the present application, embodiments of the present application further provide a network control device. As shown in Fig. 10, the network control device 1000 includes:
a second communication interface 1001, configured to exchange information with other network nodes; and
a second processor 1002, connected to the second communication interface 1001 to exchange information with other network nodes, and configured to, when executing computer program, perform the foregoing method provided in one or more technical solutions on the side of the network control device. The computer program is stored in a second memory 1003.

Specifically, the second communication interface 1001 is configured to receive a first request sent by a first network function, where the first request is used for requesting to optimize a network connection among joint learning nodes, and a type of the joint learning nodes corresponds to the network control device; and
the second processor 1002 is configured to optimize the network connection based on the received first request.

In an embodiment, the first request carries related parameters used for optimizing the network connection.

In an embodiment, the network control device is an SDN controller in a case that the joint learning nodes are joint learning nodes in an operator network.

In an embodiment, the second processor 1002 is further configured to calculate an optimal path based on the received first request, and send the optimal path to a related routing device, where the optimal path is used for transmitting data among the joint learning nodes.

In an embodiment, the network control device is a PCF in a case that the joint learning nodes are UEs.

In an embodiment, the second processor 1002 is further configured to send a PCC policy to a UPF through an SMF.

In an embodiment, the PCC policy includes at least one of the following:
a resource allocation priority;
a guaranteed bit rate;
a maximum bit rate; or
a maximum packet loss rate.

In an embodiment, the network control device is a docking node of an external network in a case that the joint learning nodes are nodes external to an operator network.

In an embodiment, the second processor 1002 is further configured to control a network control node corresponding to the docking node of the external network to perform related path configuration.

In an embodiment, the first request carries at least one of the following:
IP addresses of the joint learning nodes associated with the network connection to be optimized; or
a QoS requirement of the network connection among the joint learning nodes.

In an embodiment, the first request carries at least one of the following:
identifiers of the UEs; or
a QoS requirement of a bearer flow of the UEs.

In an embodiment, the second processor 1002 is further configured to delete the received first request in a case that joint learning ends.

It should be noted that a specific processing process of the second processor 1002 and the second communication interface 1001 may be understood with reference to the foregoing method.

Certainly, during actual application, the various components in the network control device 1000 are coupled together by a bus system 1004. It may be understood that the bus system 1004 is configured to implement connection and communication among these components. In addition to a data bus, the bus system 1004 further includes a power bus, a control bus, and a status signal bus. However, for clear description, various buses in Fig. 10 are shown as the bus system 1004.

The second memory 1003 in the embodiments of the present application is configured to store various types of data to support the operation of the network control device 1000. Examples of such data include any computer program operated on the network control device 1000.

The foregoing method disclosed in the embodiments of the present application may be applied to the second processor 1002 or implemented by using the second processor 1002. The second processor 1002 may be disposed as an integrated circuit chip having a signal processing capability. During implementation, the steps in the foregoing method may be accomplished by hardware integrated logic circuits or instructions in a software form in the second processor 1002. The second processor 1002 may be a general-purpose processor, a DSP, or another PLD, a discrete gate or transistor logic device, a discrete hardware component, or the like. The second processor 1002 may implement or execute the methods, steps, and logic block diagrams disclosed in the embodiments of the present application. The general-purpose processor may be a microprocessor, any conventional processor, or the like. The steps in the method disclosed with reference to the embodiments of the present application may be directly performed and accomplished by a hardware decoding processor or performed and accomplished by a combination of hardware and software modules in a decoding processor. The software module may be located in the storage medium. The storage medium is located in the second memory 1003. The second processor 1002 reads information in the first memory 1003 and accomplishes the steps in the foregoing methods in combination with hardware of the processor.

In exemplary embodiments, the network control device 1000 may be implemented by one or more ASICs, DSPs, PLDs, CPLDs, FPGAs, general-purpose processors, controllers, MCUs, Microprocessors, or other electronic components for performing the foregoing methods.

It may be understood that the memories (the first memory 903 and the second memory 1003) in the embodiments of the present application may be a volatile memory or a nonvolatile memory or may include both a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), a ferromagnetic random access memory (FRAM) a Flash Memory, a magnetic surface memory, an optical disc, or a compact disc read-only memory (CD-ROM). The magnetic surface memory may be a magnetic disk memory or a magnetic tape memory. The volatile memory may be a RAM used as an external cache. Through example but not limitative description, many forms of RAMs may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synclink dynamic random access memory (SLDRAM), and a direct rambus random access memory (DRRAM). The memory described in the embodiments of the present application intends to include, but not limited to, these and any other appropriate types of memories.

In exemplary embodiments, the present application further provide in some embodiments a storage medium, i.e., a computer storage medium, specifically, a computer-readable storage medium, for example, including the first memory 903 having a computer program stored therein. The computer program is executable by the first processor 902 of the first network function 900 to complete the steps in the foregoing methods on the side of the first network function. For another example, the storage medium includes the second memory 1003 having a computer program stored therein. The computer program is executable by the second processor 1002 of the network control device 1000 to complete the steps in the foregoing methods on the side of the network control device. The computer-readable storage medium may be a FRAM, a ROM, a PROM, an EPROM, an EEPROM, a Flash Memory, a magnetic surface memory, an optical disc, a CD-ROM, or another memory.

It should be noted that "first", "second", and the like are only used to distinguish between similar objects, but are not used to describe a specific order or time sequence.

The term "and/or" in this specification describes only an association relationship for describing associated objects and represents that three relationships may exist. For example, A and/or B may represent the following three cases: Only A exists, both A and B exist, and only B exists. In addition, the term "at least one" herein means any one of a plurality or any combination of at least two of a plurality, for example, including at least one of A, B, or C, and may mean including any one or more elements selected from the set consisting of A, B, and C.

In addition, the technical solutions recorded in the embodiments of the present application can be combined with each other in any combination without conflict.

The foregoing is merely preferred embodiments of the present application but is not used to limit the scope of protection of the present application.

## Claims

1. A joint learning method, applied to a first network function, the method comprising:
sending a first request to a network control device corresponding to a type of joint learning nodes, wherein the first request is used for requesting to optimize a network connection among the joint learning nodes.

2. The method according to claim 1, wherein the sending the first request to the network control device corresponding to the type of the joint learning nodes comprises:
sending the first request to the network control device corresponding to the type of the joint learning nodes in a case that a quality of the network connection among the joint learning nodes is less than or equal to a preset threshold.

3. The method according to claim 1 or 2, wherein the first request carries related parameters used for optimizing the network connection.

4. The method according to any one of claims 1 to 3, wherein the network control device is a software defined network (SDN) controller in a case that the joint learning nodes are joint learning nodes in an operator network.

5. The method according to any one of claims 1 to 3, wherein the network control device is a docking node of an external network in a case that the joint learning nodes are nodes external to an operator network.

6. The method according to any one of claims 1 to 3, wherein the network control device is a policy control function (PCF) in a case that the joint learning nodes are user equipments (UEs).

7. The method according to any one of claims 3 to 5, wherein the first request carries at least one of the following:
Internet Protocol (IP) addresses of the joint learning nodes associated with the network connection to be optimized; or
a quality of service (QoS) requirement of the network connection among the joint learning nodes.

8. The method according to claim 6, wherein the first request carries at least one of the following:
identifiers of the UEs; or
a QoS requirement of a bearer flow of the UEs.

9. A joint learning method, applied to a network control device, the method comprising:
receiving a first request sent by a first network function, wherein the first request is used for requesting to optimize a network connection among joint learning nodes, and a type of the joint learning nodes corresponds to the network control device; and
optimizing the network connection based on the received first request.

10. The method according to claim 9, wherein the first request carries related parameters used for optimizing the network connection.

11. The method according to claim 9 or 10, wherein the network control device is an SDN controller in a case that the joint learning nodes are joint learning nodes in an operator network.

12. The method according to claim 11, wherein the optimizing the network connection based on the received first request comprises:
calculating an optimal path based on the received first request, and sending the optimal path to a related routing device, wherein the optimal path is used for transmitting data among the joint learning nodes.

13. The method according to claim 9 or 10, wherein the network control device is a PCF in a case that the joint learning nodes are UEs.

14. The method according to claim 13, wherein the optimizing the network connection based on the received first request comprises:
sending a policy control and charging (PCC) policy to a user plane function (UPF) through a session management function (SMF).

15. The method according to claim 14, wherein the PCC policy comprises at least one of the following:
a resource allocation priority;
a guaranteed bit rate;
a maximum bit rate; or
a maximum packet loss rate.

16. The method according to claim 9 or 10, wherein the network control device is a docking node of an external network in a case that the joint learning nodes are nodes external to an operator network.

17. The method according to claim 16, wherein the optimizing the network connection based on the received first request comprises:
controlling a network control node corresponding to the docking node of the external network to perform related path configuration.

18. The method according to any one of claims 10 to 12, 16, and 17, wherein the first request carries at least one of the following:
IP addresses of the joint learning nodes associated with the network connection to be optimized; or
a QoS requirement of the network connection among the joint learning nodes.

19. The method according to any one of claims 13 to 15, wherein the first request carries at least one of the following:
identifiers of the UEs; or
a QoS requirement of a bearer flow of the UEs.

20. The method according to any one of claims 9 to 19, wherein the method further comprises:
deleting the received first request in a case that joint learning ends.

21. A joint learning apparatus, comprising:
a first sending unit, configured to send a first request to a network control device corresponding to a type of joint learning nodes, wherein the first request is used for requesting to optimize a network connection among the joint learning nodes.

22. A joint learning apparatus, comprising:
a first receiving unit, configured to receive a first request sent by a first network function, wherein the first request is used for requesting to optimize a network connection among joint learning nodes, and a type of the joint learning nodes corresponds to the network control device; and
a first processing unit, configured to optimize the network connection based on the received first request.

23. A first network function, comprising a first processor and a first communication interface, wherein
the first communication interface is configured to send a first request to a network control device corresponding to a type of joint learning nodes, wherein the first request is used for requesting to optimize a network connection among the joint learning nodes.

24. A network control device, comprising a second processor and a second communication interface, wherein
the second communication interface is configured to receive a first request sent by a first network function, wherein the first request is used for requesting to optimize a network connection among joint learning nodes, and a type of the joint learning nodes corresponds to the network control device; and
the second processor is configured to optimize the network connection based on the received first request.

25. A first network function, comprising a first processor and a first memory configured to store a computer program executable on the first processor,
wherein the first processor is configured to, when executing the computer program, perform the steps of the method according to any one of claims 1 to 8.

26. A network control device, comprising a second processor and a second memory configured to store a computer program executable on the second processor,
wherein the second processor is configured to, when executing the computer program, perform the steps of the method according to any one of claims 9 to 20.

27. A storage medium, having a computer program stored therein, wherein the computer program, when executed by a processor, implements the steps of the method according to any one of claims 1 to 8, or implements the steps of the method according to any one of claims 9 to 20.
